# EUROPEAN PATENT APPLICATION

(11) **EP 4 708 599 A1**
(43) Date of publication of application: **11.03.2026**
(21) Application number: 25194480.7
(22) Date of filing: 07.08.2025
(51) Int. Cl.: H02G 11/02, H02G 11/00, B60L 53/10, B60L 53/16, B60L 53/35, B60L 53/18, B60L 53/31, B60L 53/30

(54) **HIGH POWER ELECTRIC VEHICLE CHARGING SYSTEM**

(30) Priority: 19.08.2024 US 202463684499 P; 17.07.2025 US 202519272520
(71) Applicant: DS2.0, LLC, Portland, TN 37148 (US)
(72) Inventor: SOLON, Dean, Portland / TN, 37148 (US); SUEZ, Itai, Portland / TN, 37148 (US); MICHAEL, Dorothy Lou, Portland / TN, 37148 (US)
(74) Representative: Fish & Richardson P.C.

(57) **Abstract**

Systems and apparatus for implementing a megawatt electric vehicle ("EV") charging solution. In some implementations, a system includes at least one inverter; a vertical alignment track; and an electric vehicle charging interface physically connected to the vertical alignment track and electrically connected to the at least one inverter. The electric vehicle charging interface can be configured to move vertically up and/or down the vertical alignment track to adjust a height of the electric vehicle charging interface.

## Description

### CROSS-REFERENCE TO RELATED APPLICATION

This application claims priority to U.S. Provisional Application No. 63/684,499, filed on August 19, 2024.

### BACKGROUND

This specification relates to charging systems, such as electric vehicle (EV) charging systems. An electric vehicle charging system provides electric energy to recharge the battery of an electric vehicle. There are various types of EVs that need to be charged, and the charging requirements of different EVs differ. For example, electric automobiles can be charged at lower current levels than electric industrial vehicles (e.g., heavy machinery or large commercial vehicles).

### SUMMARY

In general, one innovative aspect of the subject matter described in this specification can be embodied in an electric vehicle charging system that includes at least one inverter; a vertical alignment track; and an electric vehicle charging interface physically connected to the vertical alignment track and electrically connected to the at least one inverter, wherein the electric vehicle charging interface is configured to move vertically up and/or down the vertical alignment track to adjust a height of the electric vehicle charging interface. Other embodiments of this aspect include corresponding methods and apparatus.

These and other embodiments can each optionally include one or more of the following features. The electric vehicle charging system can include a motor configured to adjust a vertical height of the electric vehicle charging device on the vertical alignment track.

The electric vehicle charging system can include a horizontal adjustment component configured to adjust a horizontal location of the electric vehicle charging interface.

The electric vehicle charging system can include a transformer that is secured to a base and connected to the at least one inverter.

The electric vehicle charging system can include a support column to which the vertical alignment track is connected. The electric vehicle charging interface can be a quick connect charging interface. The quick connect charging interface can be rated to deliver at least 100kW of power to an electric vehicle connected to the quick connect charging interface. The electric vehicle charging interface can include a boom attached to the support column; a charging cord; and a charging connector connected to the charging cord. The boom can be configured to return to a stowed state when external force is not applied to the boom.

The vehicle charging interface can include a set of festoon trolleys connected to the boom, wherein the set of festoon trolleys are configured to support the charging cord above the base as the charging connector is moved toward and/or away from the support column. The boom can be pivotably attached to the support column.

The support column can have an access port defined therein. The charging cord can be routed through the access port. The charging cord can be routed through the set of festoon trolleys.

The boom can be configured to autonomously move toward the stowed state at rest by having one or more springs connected between the boom and the support column. The boom can be configured to autonomously move toward a stowed state at rest by having a configuration that causes an imbalanced moment that biases one or more segments of the boom toward the stowed state.

The electric vehicle charging system can include an adjustable cable support configured to support a weight of a charging cord as the vehicle charging interface is moved.

The electric vehicle charging system can include a cable storage device configured to dispense and retract the charging cord as the adjustable cable support is moved horizontally.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1A is an illustration of a front view of an example electric vehicle (EV) charging system.
FIG. 1B is a side view of the electric vehicle (EV) charging system.
FIG. 1C is another side view of the electric vehicle (EV) charging system.
FIG. 1D is a top view of the electric vehicle (EV) charging system.
FIGs. 2A-2E are illustrations of another example electric vehicle (EV) charging system.
FIG. 3 is an illustration of another example electric vehicle (EV) charging system.
FIGs. 4A-4B are illustrations of another example electric vehicle (EV) charging system.
FIGs. 5A-5C are illustrations of another example electric vehicle (EV) charging system.

Like reference numbers and designations in the various drawings indicate like elements.

### DETAILED DESCRIPTION

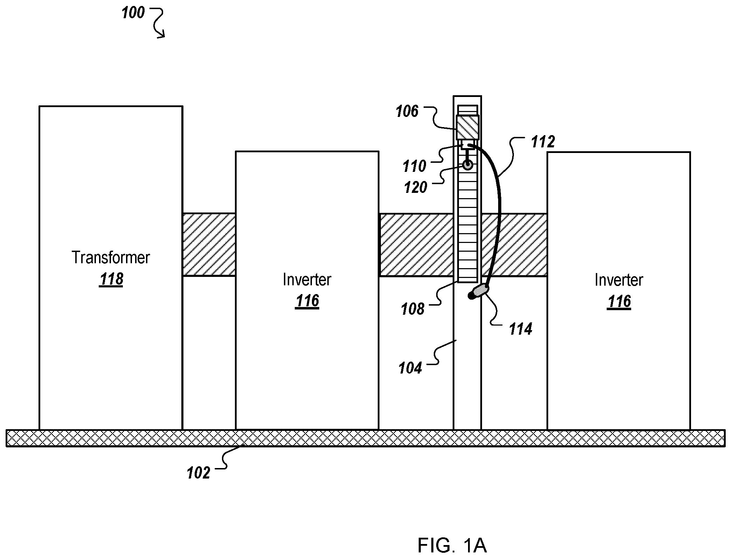

FIG. 1A is an illustration of a front view of an example electric vehicle (EV) charging system 100. The illustration shows a base 102 on which components of the system 100 are located. In some implementations, components of the system can be attached to the base 102 by bolts, adhesive, or other fasteners. In some implementations, the base 102 can be steel, aluminum, plastic, rubber, or another appropriate rigid material. In other implementations, the base 102 can be the ground (e.g., earth), concrete, asphalt, or another surface. In some implementations, the components of the system 100 can be secured to the base 102 using adhesive.

In implementations where the components of the system 100 are placed on and/or connected to the base 102 at a manufacturing facility (or another location remote from the installation location), the system 100 can be pre-assembled and then delivered to the installation location to facilitate "drop and play" functionality. For example, when the system 100 is delivered to the installation location in a pre-assembled configuration, the system 100 can simply be connected to a power source (e.g., the power grid, a renewable energy source, or another power source, such as a micro nuclear reactor), and ready for use. In this way, the installation of the system 100 is simplified, and the installation team can be limited to a single person (or small group of people) qualified to make the appropriate electrical connections between the system and the power source (not shown).

The components attached to the base plate 102 can include a support column 104 that is configured to support a boom 106. The support column 104 can be steel, aluminum, plastic, rubber, wood, or another appropriate rigid material. In some implementations, the support column 104 can include a vertical alignment track 108 configured to enable vertical movement of the boom 106 along the support column 104. For example, the vertical alignment track 108 can be implemented using a tack, a set of rails, or another mechanism configured to facilitate the vertical movement of the boom 106 along a pre-defined path or route along the support column 104. The predefined route can be defined by rails, gears, tracks, or one or more other structures that limit movement of an object (e.g., an interface to the boom 106) along the predefined route or path.

The boom 106 includes one or more festoon trolleys 110. As discussed in more detail below, the festoon trolleys 110 are configured to support a charging cord 112. For example, the charging cord 112 can be routed through the set of festoon trolleys 110, thereby supporting the charging cord 112 above the base 102. The festoon trolleys 110 can be wire-rope-travel hoist cable trolleys, beam-travel hoist cable trolleys, channel-travel hoist cable trolleys, or another type of trolley.

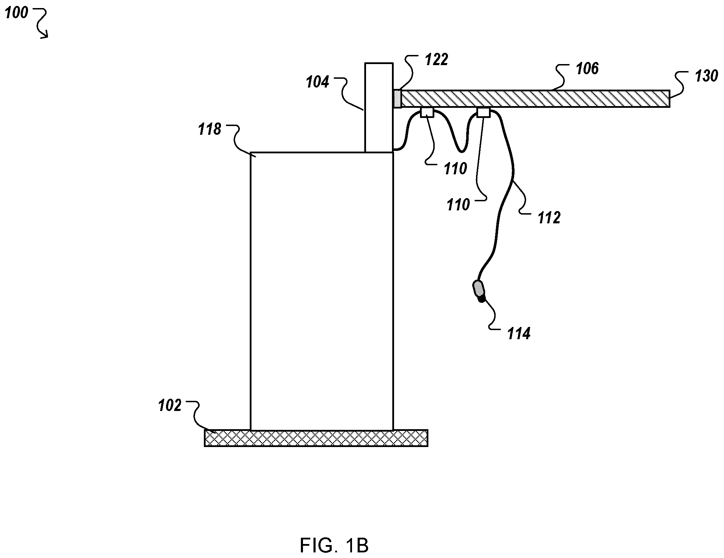

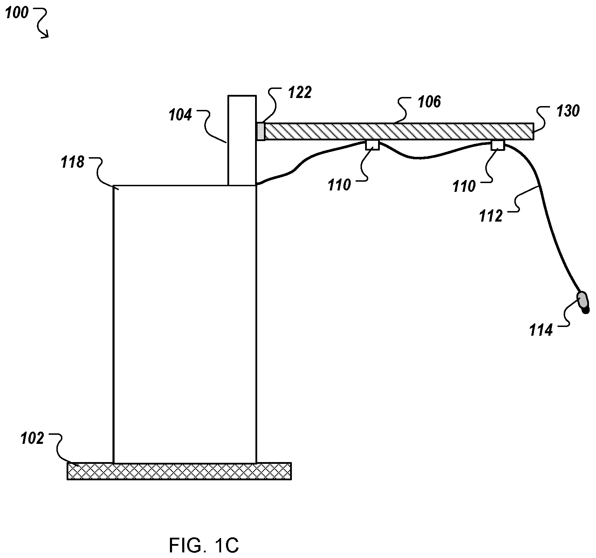

Routing the charging cord 112 through the festoon trolleys 110 (e.g., a set of one or more festoon trolleys) allows the location of a charging connector 114 to be adjusted toward and away from the support column 104, while elevating/suspending the charging cord 112 above the base 102 and/or ground. In this way, the charging system 100 eliminates tripping hazards that can be caused by the charging cable 112 being strewn across the ground. For example, as shown in FIGs. 1B and 1C, as the charging connector 114 is moved away from the support column 104, the set of festoon trolleys 110 will slide further out on the boom 106, keeping the charging cord 112 off the base 102 and/or ground. Meanwhile, when the charging connector 114 is moved back toward the support column 104, the set of festoon trolleys 110 will slide along the boom 106 toward the support column 104, while still keeping the charging cord 112 suspended above the base 102.

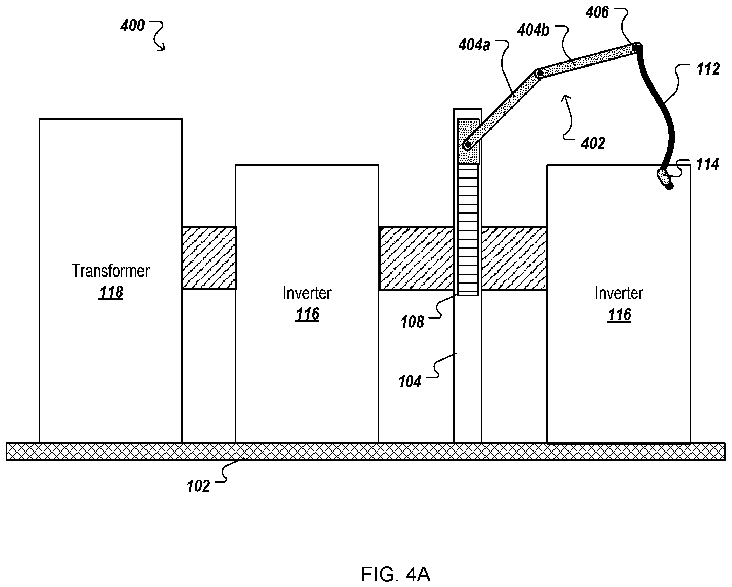

Although a boom 106/festoon trolley 110 configuration is described as an example mechanism for relocating the charging connector 114 and supporting the charging cable 112, other mechanisms can be used. For example, as shown in FIG. 4A, a mechanical arm 402 can be used to support the charging cable 112 above the ground (e.g., overhead) and relocate the charging connector 114 relative to the support column 104 and/or and an EV to be charged.

The charging connector 114 is connected to the charging cord 112 and is configured to physically and electrically interface with an EV to be charged. In some implementations, the EV to be charged is a commercial vehicle that requires high power charging up to or exceeding a charging power of 3.75 Megawatts ("MW") (e.g., such as 3000 Amps at 1250 Volts, Direct Current). For purposes of this specification, the phrase "high power charging" refers to a charging power equal to or greater than 100 kiloWatts (kW). The charging connector 114 can be a connector that complies with the Charging Interface Initiative "CarIN" task force specifications for Megawatt charging systems ("MCS") outlined in "Recommendations and requirements for MCS related standards bodies and solution suppliers", Version 1.0, 2022-11-24 (accessible at https://www.charin.global/media/pages/technology/knowledge-base/c708ba3361-1670238823/whitepaper_megawatt_charging_system_1.0.pdf), which is incorporated by reference herein in its entirety. For example, the charging connector 114 can be a connector that has one or more of the following design features:
- A single conductive plug;
- Support at least 1250 Volts DC and 3000 Amps; and
- Support differential communication protocols that enable bi-directional energy flow required for vehicle-to-grid (V2G), vehicle to everything (V2X) applications (e.g., in compliance with or based on ISO15118-20).

An example of a charging connector 114 that can be included in the system 100 is the Megawatt Charging System (MCS) multipole connector offered by Staubli International AG (staubli[dot]com/us/en/electrical-connectors/products/multi-pole-connectors/mes.html. Other charging connectors can be used.

The charging connector 114 can connect the system 100 MCS to EVs, such as class 6, 7, and 8 commercial vehicles (e.g., large trucks and busses), but the charging connector 114 can also be configured to interface with/charge other vehicles with high charging power requirements, such as vehicles in the aeronautics industry ( electric vehicle take off and landing ("e-VTOL" or e-Planes), marine vehicles, such as tug-boats, e-ferries, or electric cargo vessels), or heavy machinery vehicles, such as electric tractors, electric fork lifts, etc.

The system 100 includes one or more inverters 116, and as shown in FIG. 1A, includes two inverters 116. The inverters 116 can be configured to transform alternating current ("AC") power to DC power. For example, the inverters can be configured to convert input AC power received from a transformer 118 (or another source of power) to DC power. Each of the inverters can be, for example, a 100kVA (kilovolt-Amp) inverter that each provide 1400A, resulting in a total of 2800A of current being provided by the system 100.

More specifically, the inverters 116 can be connected (physically and electrically) to the charging cable 112, thereby making the 2800A of current available at the charging connector 114 to charge EVs. Although only two inverters 116 are shown in the system 100, more inverters 116 can be added to increase the amperage provided by the system 100 and made available for charging EVs.

The system 100 includes a transformer 118 that is connected to one or more of the inverters 116. The transformer 118 can be, for example, a low-voltage 2.5MVA (Megavolt-Amp) transformer that is configured to connect to a power source (e.g., the power grid, a micro-grid, or another power source), and convert power received from the power source into output power that is provided to the inverters 116 by way of the connection between the transformer 118 and the inverters 116. Of course, other sized transformers can be used depending on the electrical characteristics of the power provided by the power source, the power requirements of the system 100, and/or the input power requirements of the inverters 116.

For example, assuming that the transformer 118 is connected to a grid having a primary voltage of 480Y/277Vac (e.g., 480 volts between any two phases, and 277 volts between any phase and neutral) to 440Vac Delta, which is then provided as input to the inverters 118. In this example, the inverters 116 will each convert the AC input from the transformer 118 to DC, and provide 1400A of output DC current. The output of the inverters 116 is provided to the charging cable 112, which is connected to the charging connector 114.

The transformer 118 and the inverters 118 can be connected by way of a power bus 120. The power bus 120 is a set of conductors that electrically connect the inverters 116 to the transformer 118. In some implementations, the inverters 116 are connected to the transformer 118 in parallel.

The system 100 provides cable management by routing the charging cable 112 from the connection to the inverters through the support column 104 to a location near the boom 106. An access port 120 (e.g., a hole) can be defined in the support column 104, and the charging cable 112 is routed through the access port 120 to a location where the charging cable 112 is electrically connected to the inverters 116 and/or other components that are connected between the inverters 116 and the charging cable 112 (e.g., power conditioners, power storage devices, etc.).

FIG. 1B is a side view of the electric vehicle (EV) charging system 100. The view shown in FIG. 1B is from the left side of the depiction of the system 100 in FIGs. 1A-1D (i.e., looking at the system 100 from the side of the transformer 118). This view of the system 100 shows the boom 106 extending away from the support column 104. This view of the system 100 also shows two festoon trolleys 110 that are supporting the charging cord 112.

The boom 106 is attached to the support column 104 at a boom interface 122. In some implementations, the boom interface 122 can be a hinge or another hardware device that pivotably attaches the boom 106 to the support column 104, which enables the boom 106 to rotate relative to the support column 104. As shown, the boom 106 includes a set of festoon trolleys 110, and the charging cable 112 is routed through the set of festoon trolleys 110. The set of festoon trolleys 110 can be wire-rope-travel hoist cable trolleys, beam-travel hoist cable trolleys, channel-travel hoist cable trolleys, or another type of trolley.

Routing the charging cable 112 through the set of festoon trolleys 110 allows the location of the charging connector 114 to be adjusted toward and away from the support column 104, while elevating/suspending the charging cord above the base 102. In this way, the system 100 eliminates tripping hazards that can be caused by the charging cable 112 being strewn across the ground. For example, as shown in FIGs. 1B and 1C, as the charging connector 114 is moved away from the support column 104, the set of festoon trolleys 210 will slide further out on the boom 106 (e.g., along a track on the boom 106), keeping the charging cable 112 off the ground. Meanwhile, when the charging connector 114 is moved back toward the support column 104, the set of festoon trolleys 210 will slide along the boom 106 toward the support column, while still keeping the charging cable 112 suspended above the base 102.

The boom 106 can be configured to autonomously pivot toward a plane defined by a surface of the support column 104 to which the boom 106 is connected when the charging connector 114 is not in use. For example, the end 130 of the boom 106 that is furthest from the support column 104 in FIGs. 1B-1C can move towards (e.g., rotate towards) an axis that is perpendicular to the axis defined by the boom 106 when the boom 106 is in use (e.g., rotated out due to force pushing the boom 106 in a direction away from the support column 104).

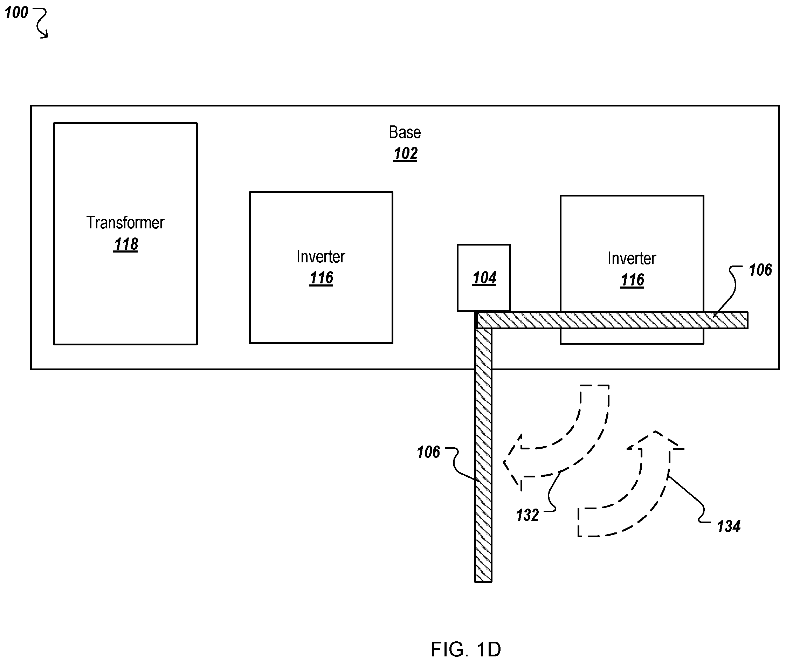

An example movement of the boom 106 between a deployed state (e.g., as depicted by the boom 106 positioned as shown after rotating in the direction depicted by the dashed arrow 132) and a stowed state (e.g., as depicted by the boom 106 positioned as shown after rotating in the direction depicted by the dashed arrow 134) is depicted by FIG. 1D, which is an illustration of a top view of the electric vehicle charging system 100. In the deployed state position, the length of the boom 106 extends from the support column 104 to a location that is further from an edge of the base 102 than when the boom 106 is in a stowed state. In some implementations, an angle between the support column 104 and the boom 106 when the boom 106 is in the deployed state is larger than the angle between the support column and the length of the boom 106 when the boom 106 is in the stowed state. In some implementations, the length of the boom 106 is the longest dimension of the boom 106.

In some implementations, one or more springs can be connected between the boom 106 and the support column 104, such that when sufficient force is not exerted on the boom 106 to stretch the spring(s), the boom 106 will move toward a stowed position and/or the base 102 (e.g., away from a location of an EV parked in front of the charging system 100) in a manner that causes an angle formed by the boom 106 (e.g., the length of the boom) and a surface of the support column 104 to which the boom 106 is attached to decrease as the boom 106 moves toward the stowed state. In some implementations, the boom 106 can be formed to have a center of gravity that causes an imbalanced moment, which causes the boom 106 to move toward a stowed state (e.g., a resting position) when sufficient force is not exerted on the boom 106. For example, the imbalanced moment can cause a distal end of the boom 106 to move/rotate in the direction depicted by the dashed arrow 134.

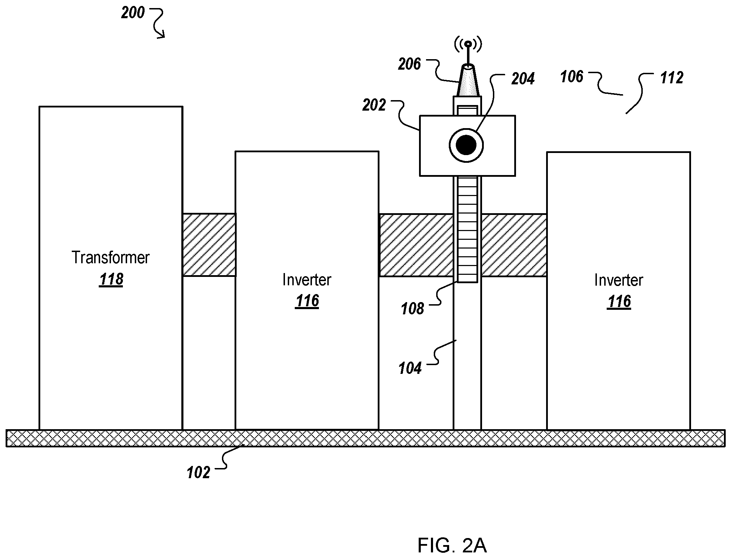

FIG. 2A is an illustration of another example electric vehicle (EV) charging system 200. Like the system 100 discussed above, the system 200 includes the base 102, the support column 104, inverters 116 and the transformer 118. These components are similar to, or the same as, those discussed above, so the description is not repeated again here.

The system 200 includes a quick connect charging interface 202 that is mounted to the support column 104. The quick connect charging interface (QCCI) 202 is configured to automate a connection between the system 202 and an EV to be charged. For example, the QCCI 202 is configured to move vertically and horizontally to align a plug 204 of the QCCI 202 with a charging receptacle of an EV to be charged. For example, the system 100 can vertically lower the QCCI 202 to a level corresponding to a vertical height of the charging receptacle of the EV to be charged so that the plug 204 can be inserted into the charging receptacle of the EV. Once vertically aligned, the plug 204 of the QCCI 202 can be moved horizontally for insertion into the charging receptacle of the EV to be charged.

In some implementations, the vertical movement (e.g., up and/or down the support column 104) can be achieved by way of the vertical alignment track 108 in a manner similar to that discussed above. In these implementations, the QCCI 202 can be mounted to, or include) a motorized mechanism (not shown) that interfaces with (e.g., mounts to) the vertical alignment track 108, and a motor can move the QCCI 202 up/down the vertical alignment track. The movement of the QCCI 202 along the vertical alignment track 108 can be controlled, for example, by a computer system programmed, or otherwise configured, to identify a location of the charging receptacle of the EV, and invoke the motor to move the QCCI 202 to the height of the charging receptacle.

The computer system can be implemented to align the QCCI 202 with the charging receptacle of the EV in a number of ways. In some implementations, the alignment can be initiated when requested by a user (e.g., by pushing a "start" button" or being authorized to begin charging an EV. For example, in response to the user being authorized to begin charging (e.g., by authenticating with the system and/or submitting account credentials), control circuitry that is part of, or in communication with, the system 100 can invoke the motor to move the QCCI 202 vertically until the plug 204 is vertically aligned with (e.g., within a specified distance of) the location of the charging receptacle of the EV.

In some implementations, the system 200 is configured to adjust the location of the QCCI 202 based on characteristics of the EV to be charged, and move the QCCI 202 to a specified position based on the characteristics of the EV to be charged. For example, control circuitry included in, or in communication with, the QCCI 202 can identify/obtain characteristics of the EV to be charged, such as, information indicating a vehicle type of the EV and/or other characteristics of the EV. The information can be obtained, for example, through user input to a user interface of the system 200. For example, when the user arrives at the system 200, the user can input a make/model/model year of the EV to be charged. Similarly, when the user arrives, a camera (not shown) included in the system 200 can be used in combination with image recognition models to determine the make/model/year of the EV to be charged. Other sensors can also be included in the system 200 to detect a location of the EV and/or charging receptacle of the EV. Those sensors can include radar, LIDAR (Light Detection and Ranging), RFID (Radio Frequency Identification) sensors, NFC (Near Field Communication) sensors, or other types of sensors.

Additionally, or alternatively, the information can be obtained through communications with the EV to be charged, a mobile application on the user's mobile device, or another manner of communications. For example, the EV can be equipped with wireless communication equipment that can interface with electronics of the system 200 (or other electronics) when the EV arrives at the system 200 (e.g., enters the communication range of the system 200. In a specific example, the system 200 can be equipped with a wireless communication device 206 that can broadcast its identity to nearby devices. In this example, the nearby devices (e.g., EV or a mobile device running a specified app) can detect the broadcast message when the devices enter a given physical area, identify the EV charging station's capabilities, and transmit information about the EV to the system 200.

In some implementations, control circuitry can perform a database search using the received information to identify a location of the charging receptacle on the EV identified to be charged, electrical charging parameters of the EV, or other information that can be used to customize the charging experience for the EV to be charged. The information could be directly provided by the EV in some situations.

In response to obtaining the information about the EV, the system 200 can adjust charging parameters to match the charging needs of the EV and/or move the QCCI 202 into a specified position so that the location of the plug 204 is closer to (e.g., within a specified distance of) the charging receptacle of the EV to be charged. In this example, the control circuitry can cause the system (e.g., by way of a motor) to vertically position the plug 204 at (or otherwise within a specified distance of) the vertical height of the charging receptacle of the EV. Additionally, the control circuity can cause the QCCI 202 to be moved horizontally (e.g., relative to the base 102) to insert the plug 204 into the charging receptacle of the EV, as discussed in more detail below.

In some implementations, the target location can be a set of coordinates (e.g., x, y, z) that is specified based, at least in part, on the characteristics of the EV to be charged. The characteristics can include one or more of a location of the charging receptacle on the vehicle, orientation of the vehicle relative to the QCCI 202, and/or physical dimensions of the vehicle. Using these characteristics, the control circuitry can select the coordinates of the target location, as well as a movement path that will enable the target location to be reached without colliding with the vehicle or any other objects.

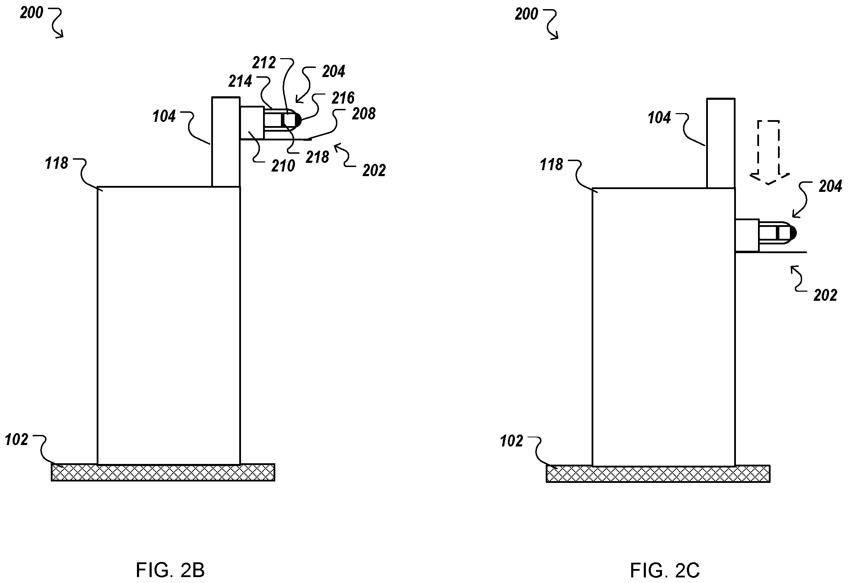

FIG. 2B is another illustration of the example electric vehicle (EV) charging system 200. The view shown in FIG. 2B is from the left side of the depiction of the system 200 in FIG. 2A (i.e., looking at the system 100 from the side of the transformer 118). FIG. 2B shows the QCCI 202 located near a top of the support column 104. In this view, additional details of the QCCI 202 are also shown.

For example, this view shows that the QCCI 202 includes a horizontal adjustment component 208 that is configured to facilitate horizontal movement (e.g., relative to the base 102) of the plug 204. The horizontal adjustment component 208 can be implemented using a tack, a set of rails, or another mechanism/device/component configured to facilitate the horizontal movement of the plug 204 along a pre-defined path or route toward and away the support column 104. The predefined route can be defined by rails, gears, tracks, or one or more other structures that limit movement of an object (e.g., the plug 204) along the predefined route or path.

This view also shows the inclusion of a controller 210 of the QCCI 202. The controller 210 can include one or more data processing apparatus and/or a motor, among other mechanical and/or electrical components. The controller 210 is configured to move the QCCI 202 along the horizontal adjustment component 208 and/or vertically up/down the support column 104. For example, when a location of the charging receptacle of an EV is determined, the controller 210 can engage one or more motors that move the QCCI 202 vertically to align the plug 204 with the charging receptacle of the EV to be charged, and horizontally move the QCCI 202 to insert the plug 204 into the charging receptacle of the EV to be charged.

The view depicted by FIG. 2B also shows more details of the plug 204 of the QCCI 202. As shown, the plug 204 has an internal shaft 212, which is surrounded by a sheath 214. In an uninserted state, at least a portion of the internal shaft 212 is covered by the sheath 214 so that the covered portion of the internal shaft 212 is not accessible. In this way, the sheath 214 prevents two conductors 216 and 218 of the internal shaft 214 from being electrically shorted. As shown, one conductor 216 of the internal shaft 212 is at the tip (or within a specified distance of the tip) of the internal shaft 212, and the second conductor 218 of the internal shaft 212 is located further from the tip of the internal shaft 212 than the first conductor.

The sheath 214 is configured to retract when the plug 204 is inserted into the charging receptacle of an EV, thereby exposing more of the internal shaft 212. For example, the sheath 214 can be made from (or include) a compressible material that compresses when pressure is placed on the sheath 214. In this way, the sheath 214 is configured to retract relative to the internal shaft 212, thereby exposing more of the internal shaft 212. When the sheath 214 is sufficiently compressed, the two conductors 216 and 218 of the internal shaft 212 are exposed, and capable of interfacing with corresponding conductors in the charging receptacle of the EV to be charged. An example QCCI that can be used in the system 200 is a quick connect charging interface provided by Staubli International AG (staubli[dot]com/us/en/electrical-connectors/products/multi-pole-connectors/qcc. html).

FIG. 2C is another illustration of the example electric vehicle (EV) charging system 200. FIG. 2C shows the QCCI being moved down the support column 104, as previously discussed. The lowering of the QCCI 202 can continue until the plug 204 is aligned with (e.g., within a specified distance of) a determined location of the charging receptacle of the EV. The movement of the QCCI 202 is shown relative to the base 102, the support column 104, and the transformer 118, which are depicted in this view.

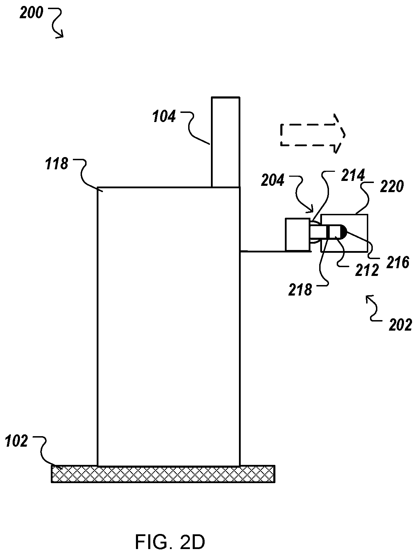

FIG. 2D is another illustration of the example electric vehicle (EV) charging system 200. FIG. 2D shows the plug 204 of the QCCI 202 moved horizontally away from the support column 104 (e.g., toward an EV to be charged), and inserted into a charging receptacle 220 of an EV. The horizontal movement of the plug 204 enables charging of an EV that is some distance from the system 200. In this illustration, the box 220 represents the charging receptacle of an EV to be charged. When the plug 204 of the QCCI 202 is moved away from the support column 104, and to the location of the charging receptacle 220 of the EV, the plug 204 can begin to be inserted into the charging receptacle 220. As movement of the plug 204 continues to cause insertion of the plug 204 into the charging receptacle 220, the sheath 214 is retracted, compressed, or otherwise manipulated to expose the inner shaft 212. As discussed above, as more of the inner shaft 212 is exposed, the conductors 216 and 218 are also exposed, and able to engage (electrically connect) to conductors within the charging receptacle 220, such that the EV can be charged.

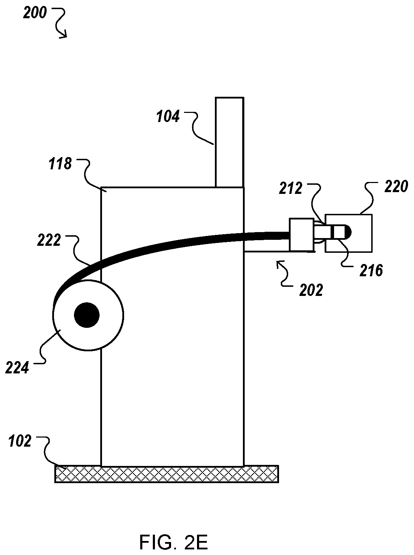

FIG. 2E is another illustration of the example electric vehicle (EV) charging system 200. In this illustration the path of the conductor 222 that electrically connects the QCCI 202 to the power source is shown. Because of the power requirements of the EVs to be charged by the system 200, the conductor 222 will have a larger diameter and weight than charging cables used to charge regular EVs. This larger size/weight may warrant specialized cable management solutions. In this example, the conductor 222 is extendible and retractable from a cable storage device 224. The cable storage device 224 in this example, is a spool solution in which the conductor 222 can be unwound from the spool when the QCCI 202 extends away from the support column 104, and be wound up (retracted) by the spool solution when the QCCI 202 is moved horizontally toward the support column 104. The cable storage device 224 can be connected to the back of other components of the system 200, or mounted on a separate support column of its own (not shown). The retraction of the conductor 222 can be facilitated by a spring mechanism in the cable storage device 222, or the conductor 222 can be connected to / include an elastic portion that automatically retracts the conductor 222 when less than a threshold amount of force is applied in the opposite direction of the force generated by the elastic portion.

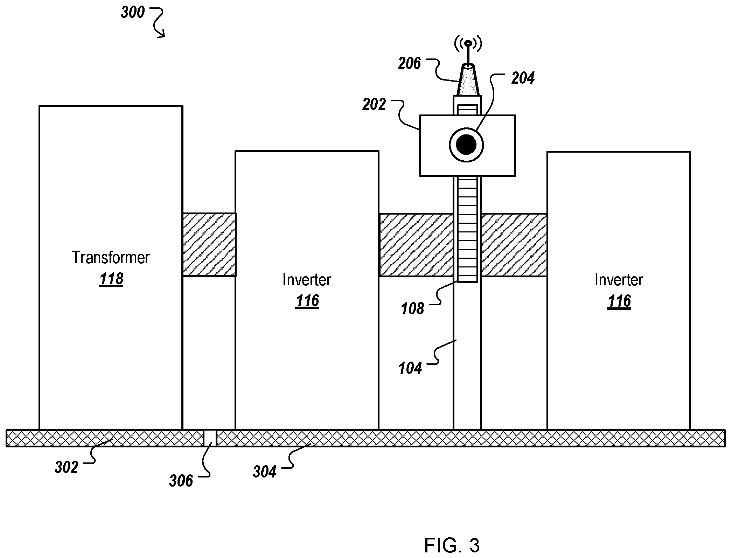

FIG. 3 is an illustration of another example electric vehicle (EV) charging system 300. The configuration of the system 300 is substantially the same as that of the system 200 discussed above, except that the system 300 is arranged on two different bases 302 and 304. In this example, the transformer 118 is secured to, or otherwise placed on, the base 302, while the inverters 116 and support column 104 are secured to, or otherwise placed on, the base 304. This "split base" configuration enables the transformer 118 and base 302 to be shipped separately (e.g., on another truck, rail car, boat, plane, etc.) from the base 304 on which the inverters 116, support column 104, QCCI 202 (including the plug 204) and other components (e.g., communication device 206 and vertical alignment track 108) are pre-installed. This provides more flexibility in the equipment required to transport the system 300.

Once the bases 302 and 304 are delivered to the installation site, they can be installed side by side (e.g., without a connection between the bases), or the bases 302 and 304 can be connected by a connection mechanism 306. The connection mechanism 306 can be any fastener, adhesive, or other mechanism configured to limit movement of the base 302 relative to the base 304 and vice versa. In this way, the electrical connections made between the transformer 118 and the inverters 116 is less susceptible to damage potentially caused by the movement of the base 302 relative to the base 304.

FIG. 4A is an illustration of another example electric vehicle (EV) charging system 400. The system 400 includes many of the same components discussed above with reference to FIG. 1A. For example, the system 400 includes the base 102, the support column 104, the vertical alignment track 108, the inverters 116, the transformer 118, the charging cord 112 and the charging connector 114. However, instead of having the boom 106 depicted in FIGs. 1A-1D, the system 400 includes a mechanical arm 402. Although the mechanical arm 402 can be considered a type of boom, different terminology is being used for purposes of clarity. As shown in FIG. 4A, the mechanical arm 402 has multiple extension members 404a and 404b, which can also be referred to as "links" or "segments" of the mechanical arm 402. The extension members 404a and 404b can be attached to one another through various types of joints such as rotary or linear joints to form the mechanical arm 402. The number and type of links used in a mechanical arm depend on the intended use and required range of motion. FIG. 4A shows the mechanical arm 402 implemented with two extension members 404a and 404b that are pivotally attached to each other, and to the support column 104. Additional components can be attached to the extension members 404a and 404b to provide the mechanical arm 402 with the ability to perform specific tasks. For example, as discussed in more detail below, an EV charging connector (and/or other components) and/or sensors can be integrated into or attached to an end link (e.g., extension member 404b) of a mechanical arm 402 so that the mechanical arm 402 can insert the charging connector into the charging receptacle of the EV.

In FIG. 4A, the mechanical arm 402 is configured to route the charging cord 112 from the support column 104 to an arm access port 406 of the mechanical arm 402. The arm access port 406 can be formed as a void in the surface of the extension member 404b through which the charging cord 112 passes to make the charging cord 112 accessible and maneuverable by a person (or machine) connecting the charging connector 114 to the charging receptacle/port of the EV. In some implementations, the arm access port 406 can be a connectorized port of the mechanical arm. That is, the arm access port 406 can have a connector to which a mating connector of the charging cord 112 can be connected.

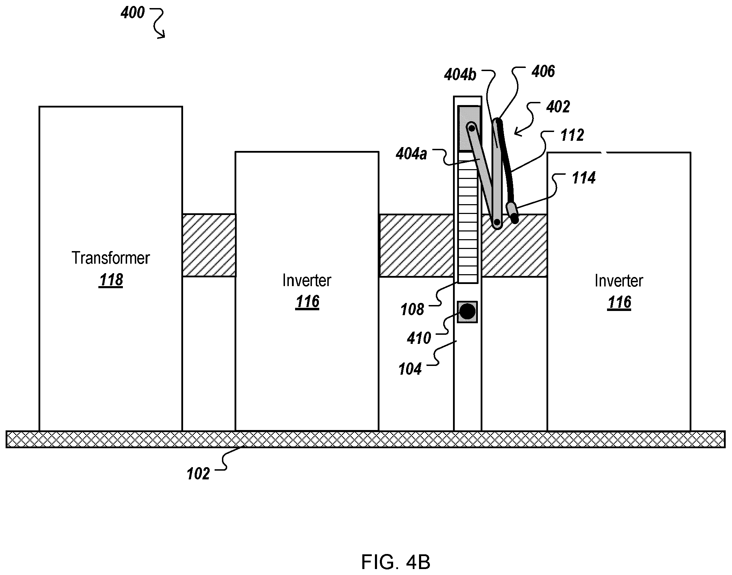

In some implementations, the mechanical arm can be configured to be stowed, for example, as shown in FIG. 4B. In the stowed state, the extension members 404a and 404b are in a retracted position, such that the charging cord 112 is closer to the support column 104 than it was in the active state shown in FIG. 4A. More specifically, in this implementation, the mechanical arm 402 is configured such that the extension members 404a and 404b can be folded up in an accordion fashion. For example, the extension member 404a is pivotally/rotationally connected to the support column 104 so that the extension member 404a can fold down (or up), which causes the full length (and/or distal end of the extension member 404a connected to the extension member 404b) of the extension member 404a to be closer to the support column 104 than it was in the active state shown in FIG. 4A. Similarly, the extension member 404b is pivotally/rotationally connected to the extension member 404a, such that the extension member 404b can fold in closer to each of the extension member 404a and the support column 104.

In some implementations, the stowing (e.g., folding or other retracting) of the extension members 404a and 404b can be performed manually. In some implementations, the stowing can be performed by hydraulics, a motor, or appropriate electronic mechanisms. For example, the transition from one state (e.g., active state) to another state (e.g., stowed state) can be initiated in response to the mechanical arm 402, or another component including control circuitry, such as one or more processors, detecting user interaction with a change state button. More specifically, interaction with a "close" button or "open" button can be detected, and in response, the movement (e.g., folding or unfolding) of the mechanical arm 402 can be initiated. Movement of the mechanical arm 402 can be halted when the mechanical arm 402 has completed a state change (e.g., the mechanical arm 402 reaches the active state or the stowed state).

The mechanical arm 402 can also be configured to include circuitry that detects when the charging connector has been removed from the charging receptacle of the EV, and initiate a transition to the stowed state in response to detecting that the charging connector has been physically removed from the charging receptacle. For example, the mechanical arm 402 can include an open circuit sensor that triggers a state change signal when an open circuit exists at the charging connector 114. Additionally, or alternatively, the mechanical arm 402 can include a mechanical storage interface (not shown) that is configured to receive the charging connector 114, and detect when the charging connector 114 is inserted into a charging connector storage receptacle 410 (e.g., a mechanical storage interface configured to receive the charging connector 114). When the charging connector 114 is detected in the charging connector storage receptacle 410 (e.g., by control circuitry), the state change signal can be generated. The state change signal can cause a motor to begin retracting and/or folding the mechanical arm 402 until it reaches the stowed state.

When the mechanical arm 402 reaches the stowed state, the arm access port 406 can be elevated relative to an opposite end of the extension member 404b, which reduces the amount of the charging cord 112 that may come in contact with the ground, and may prevent the charging cord 112 and charging connector 114 from contacting the ground completely depending on the length of the charging cord 112 and the length of the extension member 404b. For example, a length of the extension member 404b can be selected so that the length of the charging cord 112 is equal to or shorter than the length of the extension member 404b. Similarly, the length of the extension member 404b can be selected so that the height of the arm access port 406 from the ground in the stowed state is greater than (or equal to) the length of the charging cord 112.

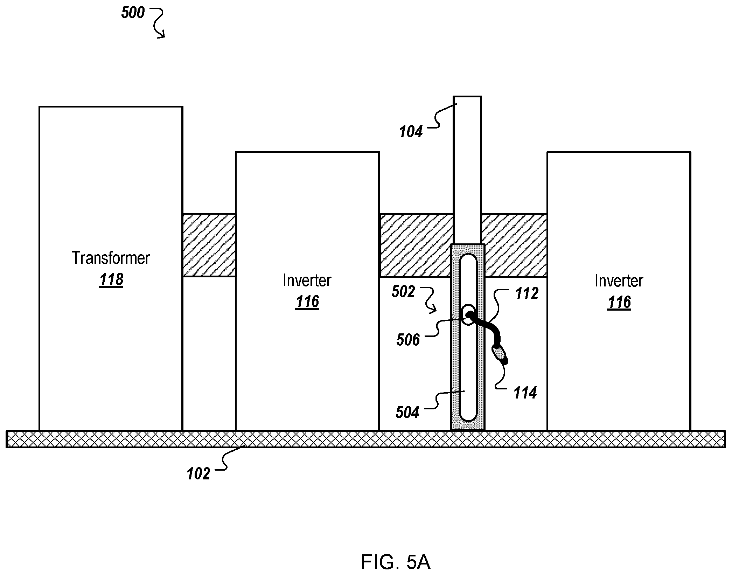

FIG. 5A is an illustration of another example electric vehicle (EV) charging system 500. The system 500 includes many of the same components discussed above with reference to FIGs. 1A-1D. For example, the system 500 includes the base 102, the support column 104, the inverters 116, the transformer 118, the charging cord 112, and the charging connector 114. However, instead of having the boom 106 depicted in FIGs. 1A-1D, the system 500 includes an adjustable cable support 502. The adjustable cable support 502 is configured to support the weight of the charging cord 112 as the charging connector 114 is moved. As the charging capacity of the system 500 increases, so does the circumference and weight of the charging cord 112 required to support the charging capacity. As such, the ability for a person to maneuver the charging cord 112 and charging connector decrease. Also, excessive force can be placed on the connection between the charging cord 112 and the charging connector 114 during movement of the charging connector 114 as the weight of the charging cord 112 increases.

To facilitate easier movement of the charging connector 114 (e.g., to position the charging connector 114 at the location of the charging receptacle on the EV), and to reduce the force exerted on the connection between the charging connector 114 and the charging cord 112 during movement, the adjustable cable support ("ACS") 502 can be configured to support the weight of the charging cord 112 at various heights from the ground (e.g., be vertically adjustable) and also support the weight of the charging cord 112 at various distances from the support column 104 and/or the inverters 116. As shown in FIG. 5A, the ACS 502 can have a bottom that is at the level of the base 102 (e.g., on or near the earth/ground). The height of the ACS 502 can be selected based on the vertical height of the charging receptacles of EVs to be charged by the system 500. For example, assuming that the largest height (e.g., vertical distance of the ground) of a charging receptacle of an EV to be charged is 1.5 m (5 feet), the ACS 502 can be at least 1.5 m (5 feet) tall. Of course, if the largest height is greater than 1.5 m (5 feet), the height of the ACS 502 can be selected so that the weight of the charging cord 112 is support at the largest height.

The ACS 502 can include an inner channel 504 that facilitates vertical movement of the charging cord 112 that is passing through the ACS 502. In some implementations, the ACS 502 can include a cable support mechanism ("CSM") 506 that is configured to support the charging cord 112, and move up and down the inner channel 504. In this way, the CSM 506 can adjust the vertical height at which the charging cord 112 exits the ACS 502 and the height of the charging connector 114. For example, the CSM 506 can be connected to/on a vertically aligned track, and the ACS 502 can include a motor (not shown) that moves the CSM 506 up and down the inner channel 504 (e.g., along the vertically aligned track). Moving the CSM 506 up and down the inner channel 504 in this way eliminates the need for a person to lift the entire weight of the charging cord 112 because the weight of the charging cord 112 that is on an opposite side of the ACS 502 from the charging connector 114 will be lifted by the ACS 502.

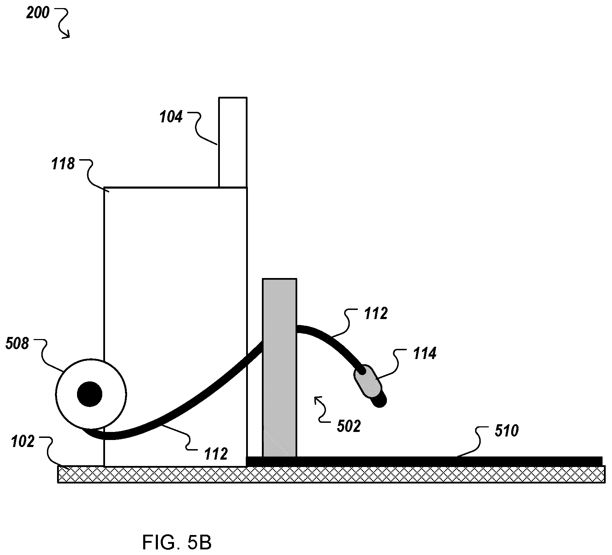

FIG. 5B is another illustration of the example electric vehicle (EV) charging system 500. In this illustration the path of the charging cord 112 that electrically connects the charging connector 114 to the power source is shown (e.g., between the inverters 116 and/or through the support column 104). As noted above, because of the power requirements of the EVs to be charged by the system 500, the charging cord 112 will have a larger diameter and weight than charging cables used to charge regular EVs (e.g., personal vehicle EVs). This larger size/weight may warrant specialized cable management solutions. In this example, the charging cord 112 is extendible and retractable from a cable storage device 508. The cable storage device 508 in this example, is a spool solution in which the charging cord 112 can be unwound/dispensed from the spool when the charging connector 114 is moved away from the cable storage device 508, and be wound up (retracted) by the cable storage device 508 when the charging connector is moved horizontally toward the cable storage device 508. The cable storage device 508 can be connected to the back of other components of the system 500 (e.g., the support column 104), or mounted on a separate support column of its own (not shown). The retraction of the charging cord 112 can be facilitated by a spring mechanism in the cable storage device 508, or the charging cord 112 can be connected to and/or include an elastic portion that automatically retracts the charging cord when less than a threshold amount of force is applied in the opposite direction of the force generated by the elastic portion.

The ACS 502 can be mounted on a track 510 to facilitate movement away from and toward the cable storage device 508, support column 104, transformer 118, and/or inverters (not shown in this view). The track 510 can be on top of the base 102 (e.g., ground), or integrated into the base 102 (e.g., below grade) to reduce tripping hazards. To facilitate movement of the ACS 502, the ACS 502 can be secured to a portion of the track 510, and the track can be configured to move horizontally to reposition the ACS 502 at different distances from the other components of the system 500. For example, the track 510 can be configured similar to a conveyer belt, such that the portion of the track 510 to which the ACS 502 is connected will move horizontally relative to the other components of the system 500 when a motor moves the track 510. In another example, the track can include a chain or pulley system that moves the ACS 502 when the chain or pulley system is activated.

In some implementations, a motor of the ACS 502 and/or track 510 can be activated to reposition the ACS 502 at different locations along the track 510 and/or otherwise horizontally reposition the ACS 502 at different horizontal distances from other components of the system 500. In some implementations, the ACS 502 can be on wheels that facilitate movement of the ACS 502 along the horizontal distance of the track 510. In these implementations, the ACS 502 can include a motor that is connected to the wheels (e.g., by a drive train), and activation of the motor can facilitate movement of the ACS 502 along the track 510. When the ACS 502 is on wheels, the track 510 can be grooves in which the wheels are placed to restrict movement of the ACS 502. In some situations, the track can be a guideline, or another reference axis that the ACS 502 can use to move within a specified area. For example, the ACS 502 can include a camera, LIDAR (light detection and ranging), or another sensor that is configured to identify the guideline or other reference axis or reference object, and move the ACS 502 in the manner discussed above.

In some implementations, movement of the ACS 502 can be performed manually. For example, the ACS 502 can be configured to move horizontally away from the cable storage device 508, support column 104, transformer 118, and/or inverters (not shown in this view) when force away from the cable storage device 508, support column 104, transformer 118, and/or inverters (not shown in this view) is applied to the ACS 502. In some implementations, the movement of the ACS 502 can be performed by hydraulics, a motor, or appropriate electronic mechanisms. For example, the transition from one location to another location can be initiated in response to the ACS 502, or another component including control circuitry, such as one or more processors, detecting user interaction with a movement control (e.g., button, lever, or another mechanism configured to initiate movement of the ACS 502). More specifically, interaction with an "away" button or "stow" button can be detected, and in response, the movement of the ACS 502 can be initiated. Movement of the ACS 502 can be halted when the ACS 502 has reached a specified location and/or when the user halts interaction with the movement control.

The ACS 502 can also be configured to include circuitry that detects when the charging connector 502 has been removed from the charging receptacle of the EV, and initiate movement of the ACS 502 toward the cable storage device 508, support column 104, transformer 118, and/or inverters (not shown in this view) in response to detecting that the charging connector 114 has been physically removed from the charging receptacle. For example, the ACS 502 can include an open circuit sensor that triggers a retract signal when an open circuit exists at the charging connector 114. Additionally, or alternatively, the ACS 502 can include a mechanical storage interface that is configured to receive the charging connector 114, and detect when the charging connector 114 is inserted into the mechanical storage interface that configured to receive the charging connector 114. When the charging connector 114 is detected in the mechanical storage interface (e.g., by control circuitry), the retract signal can be generated. The retract signal can cause a motor to begin retracting and/or moving the ACS 502 until it reaches a specified location closer to the cable storage device 508, support column 104, transformer 118, and/or inverters (not shown in this view).

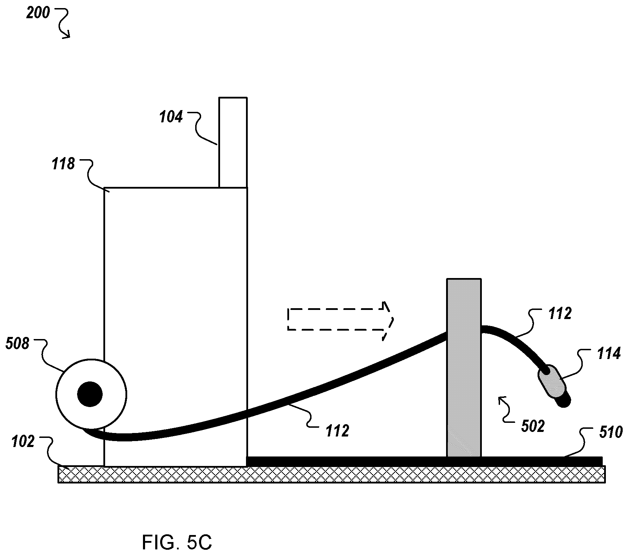

In some implementations, movement of the ACS 502 can be invoked by a switch (or another mechanism) located in the CSM 506 or another component that is in contact with the charging cord 112. For example, movement of the charging connector 114 away from the ACS 502 can put sufficient force on the charging cord 112 (e.g., away from the ACS 502) such that the switch changes state and engages a motor (or another mechanism) to move the ACS 502 away from the cable storage device 508, support column 104, transformer 118, and/or inverters (not shown in this view), as shown in FIG. 5C. Continuing with this example, when an opposite force (e.g., toward the ACS 502) is placed on the charging cord 112, the switch can again change state, and engage the motor to move the ACS toward the cable storage device 508, support column 104, transformer 118, and/or inverters (not shown in this view).

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. An electric vehicle charging system comprising:
at least one inverter;
a vertical alignment track; and
an electric vehicle charging interface physically connected to the vertical alignment track and electrically connected to the at least one inverter, wherein the electric vehicle charging interface is configured to move vertically up and/or down the vertical alignment track to adjust a height of the electric vehicle charging interface.

2. The electric vehicle charging system of claim 1, further comprising a motor configured to adjust a vertical height of the electric vehicle charging device on the vertical alignment track.

3. The electric vehicle charging system of claim 1 or 2, further comprising a horizontal adjustment component configured to adjust a horizontal location of the electric vehicle charging interface.

4. The electric vehicle charging system of any one of claims 1 to 3, further comprising a transformer that is secured to a base and connected to the at least one inverter.

5. The electric vehicle charging system of any one of claims 1 to 4, further comprising a support column to which the vertical alignment track is connected.

6. The electric vehicle charging system of any one of claims 1 to 5, wherein the electric vehicle charging interface is a quick connect charging interface, and
optionally wherein the quick connect charging interface is rated to deliver at least 100kW of power to an electric vehicle connected to the quick connect charging interface.

7. The electric vehicle charging system of any one of claims 1 to 5, wherein the electric vehicle charging interface comprises:
a boom attached to the support column;
a charging cord; and
a charging connector connected to the charging cord.

8. The electric vehicle charging system of claim 7, wherein the boom is configured to return to a stowed state when external force is not applied to the boom.

9. The electric vehicle charging system of claim 7 or 8, wherein the vehicle charging interface further comprises a set of festoon trolleys connected to the boom, wherein the set of festoon trolleys are configured to support the charging cord above the base as the charging connector is moved toward and/or away from the support column.

10. The electric vehicle charging system of claim 9, wherein the boom is pivotably attached to the support column.

11. The electric vehicle charging system of claim 10, wherein:
the support column has an access port defined therein; and
the charging cord is routed through the access port.

12. The electric vehicle charging system of claim 10, wherein the charging cord is routed through the set of festoon trolleys.

13. The electric vehicle charging system of any one of claims 7 to 12, wherein the boom is configured to autonomously move toward the stowed state at rest by having one or more springs connected between the boom and the support column.

14. The electric vehicle charging system of any one of claims 7 to 13, wherein the boom is configured to autonomously move toward a stowed state at rest by having a configuration that causes an imbalanced moment that biases one or more segments of the boom toward the stowed state.

15. The electric vehicle charging system of any preceding claim, further comprising:
an adjustable cable support configured to support a weight of a charging cord as the vehicle charging interface is moved, and
optionally wherein the electric vehicle charging system further comprises a cable storage device configured to dispense and retract the charging cord as the adjustable cable support is moved horizontally.
